(19) Europäisches Patentamt / European Patent Office / Office européen des brevets

(11) **EP 4 653 401 A1**

(12) **EUROPEAN PATENT APPLICATION**
published in accordance with Art. 153(4) EPC

(43) Date of publication:
**26.11.2025 Bulletin 2025/48**

(21) Application number: **24810727.8**

(22) Date of filing: **03.04.2024**

(51) International Patent Classification (IPC):
$C03C\ 13/02^{(2006.01)}$    $C03C\ 3/06^{(2006.01)}$
$C08J\ 5/08^{(2006.01)}$    $D03D\ 1/00^{(2006.01)}$
$D03D\ 15/267^{(2021.01)}$

(52) Cooperative Patent Classification (CPC):
**C03C 3/06; C03C 13/00; C08J 5/08; D03D 1/00; D03D 15/267**

(86) International application number:
**PCT/JP2024/013780**

(87) International publication number:
**WO 2024/241719 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.05.2023 JP 2023086292**

(71) Applicant: **Nitto Boseki Co., Ltd.
Fukushima-shi,
Fukushima 960-8161 (JP)**

(72) Inventors:
• **HIRAISHI, Yoichi
Koriyama-shi, Fukushima 963-8061 (JP)**

• **UTSUGI, Takahiro
Tokyo 102-0083 (JP)**
• **KURITA, Tadashi
Koriyama-shi, Fukushima 963-8061 (JP)**
• **NAKAMURA, Koichi
Koriyama-shi, Fukushima 963-8061 (JP)**
• **NONAKA, Takashi
Koriyama-shi, Fukushima 963-8061 (JP)**
• **HIRAYAMA, Norio
Narashino-shi, Chiba 275-8575 (JP)**
• **UNUMA, Hidero
Yonezawa-shi, Yamagata 992-8510 (JP)**

(74) Representative: **Schön, Christoph
Dr. Schön, Neymeyr & Partner mbB
Bavariaring 26
80336 München (DE)**

(54) **GLASS FIBER, GLASS FIBER WOVEN FABRIC, AND GLASS FIBER-REINFORCED RESIN COMPOSITION**

(57) The present invention provides glass fiber that can give a glass fiber woven fabric having an ultra-low dielectric loss tangent and having sufficient handleability. The glass fiber of the present invention comprises a glass composition including $SiO_2$ in a range of 92.50 to 99.99% by mass, $TiO_2$ in a range of 0.01 to 5.00% by mass, and $Al_2O_3$ in a range of 0.00 to 2.50% by mass with respect to the total amount of the glass composition, wherein the glass fiber has a tensile fracture stress in a range of 1.0 to 100.0 MPa, and the content S of $SiO_2$, the content T of $TiO_2$, and the tensile fracture stress BS of the glass fiber satisfy the following formula (1):

$$5.2 \leq BS \times (T / (100 - S))^2 \leq 33.8 \cdots (1).$$

EP 4 653 401 A1

Processed by Luminess, 75001 PARIS (FR)

## Description

Technical Field

The present invention relates to glass fiber, a glass fiber woven fabric, and a glass fiber-reinforced resin composition.

Background Art

Conventionally, glass fiber has been widely used in various applications to improve the strength of resin molded products, and the resin molded products have been used for a housing or a part, such as a printed wiring board, of electronic devices such as a server, a smartphone, a laptop computer, and the like.

In general, dielectrics such as glass absorb energy from alternating current as heat (this is referred to as dielectric loss), and thus have a problem that the above resin molded product generates heat when the resin molded product is used for a housing or a part of the electronic devices.

The dielectric loss absorbed by glass is proportional to the dielectric constant and the dielectric loss tangent determined by the component and the structure of the glass, and is represented by the following formula:

$$W = kf \times \varepsilon^{1/2} \times \tan\delta.$$

wherein W is a dielectric loss, k is a constant, f is a frequency, $\varepsilon$ is a dielectric constant, and $\tan\delta$ is a dielectric loss tangent. From the formula, it is found that the dielectric loss is larger and heat generation of the above resin molded product is larger as the dielectric constant and the dielectric loss tangent are larger and as the frequency is higher.

In recent years, in response to the fact that the frequency (f in the above formula) of the alternating current used in the above electronic devices has increased, the glass fiber used for a housing or a part of the above electronic device has been required to have a lower dielectric constant and a lower dielectric loss tangent in order to reduce dielectric loss. In addition, the glass fiber has been particularly required to have a lower dielectric loss tangent because the dielectric loss tangent has larger influence on reduction in dielectric loss energy than the dielectric constant $\varepsilon$, which is raised to the power of 1/2, has.

Glass fiber having a quartz glass composition in which the content of $SiO_2$ is 90% by mass or more, in particular, 99% by mass or more with respect to the total amount of the glass composition is known as glass fiber having an ultra-low dielectric loss tangent (e.g., see Patent Literature 1). A method of eluting non-$SiO_2$ components highly soluble in acids into an acid solution from a mother glass composition containing such non-$SiO_2$ components is known as a method for producing glass fiber having a glass composition with such a high content of $SiO_2$ (e.g., see Patent Literature 2).

Having an ultra-low dielectric loss tangent means that the dielectric loss tangent of the glass fiber at a measurement frequency of 28 GHz is less than 0.0010. The dielectric loss tangent of glass fiber at a measurement frequency of 28 GHz can be measured by a method described later.

Citation List

Patent Literature

Patent Literature 1: Japanese Patent Laid-Open No. 2009-263569
Patent Literature 2: Japanese Patent Laid-Open No. 9-169548

Summary of Invention

Technical Problem

However, the glass fiber obtained by the method of Patent Literature 2 and having a high content of $SiO_2$ with respect to the total amount of the glass composition does not necessarily has an ultra-low dielectric loss tangent, and, even if having an ultra-low dielectric loss tangent, the glass fiber may disadvantageously fail to have sufficient handleability to endure industrial processing and conveyance in glass fiber products containing the glass fiber, in particular, light, small glass fiber products, especially, glass fiber woven fabrics.

An object of the present invention is, by eliminating the disadvantage, to provide glass fiber having an ultra-low dielectric loss tangent and having sufficient handleability.

Another object of the present invention is to provide a glass fiber woven fabric and a glass fiber-reinforced resin composition each including the glass fiber of the present invention.

Solution to Problem

In order to achieve the object, the glass fiber of the present invention comprises a glass composition including $SiO_2$ in a range of 92.50 to 99.99% by mass, $TiO_2$ in a range of 0.01 to 5.00% by mass, and $Al_2O_3$ in a range of 0.00 to 2.50% by mass with respect to the total amount of the glass composition, wherein the glass fiber has a tensile fracture stress in a range of 1.0 to 100.0 MPa, and the content S of $SiO_2$, the content T of $TiO_2$, and the tensile fracture stress BS of the glass fiber satisfy the following formula (1):

$$5.2 \leq BS \times (T / (100 - S))^2 \leq 33.8 \cdots (1).$$

When the glass fiber of the present invention has a glass composition with the contents of $SiO_2$, $TiO_2$, and $Al_2O_3$ in the above ranges, the glass fiber has a tensile fracture stress in the above range, and the S, T, and BS satisfy the formula (1), the glass fiver is allowed to have an ultra-low dielectric loss tangent and to have sufficient handleability.
Preferably, the S, T, and BS of the glass fiber of the present invention satisfy the following formula (2):

$$9.1 \leq BS \times (T / (100 - S))^2 \leq 33.5 \cdots (2).$$

When the S, T, and BS of the glass fiber of the present invention satisfy the formula (2), the glass fiber is allowed to more reliably have an ultra-low dielectric loss tangent and to have excellent handleability.
Preferably, the S, T, and BS of the glass fiber of the present invention satisfy the following formula (3):

$$20.1 \leq BS \times (T / (100 - S))^2 \leq 33.1 \cdots (3).$$

When the S, T, and BS of the glass fiber of the present invention satisfy the formula (3), the glass fiber is allowed to have a particularly ultra-low dielectric loss tangent and to have excellent handleability. Here, having a particularly ultra-low dielectric loss tangent means that the dielectric loss tangent of the glass fiber at a measurement frequency of 28 GHz is 0.0005 or less. The dielectric loss tangent of glass fiber at a measurement frequency of 28 GHz can be measured by a method described later.
The glass fiber woven fabric of the present invention includes the above glass fiber of the present invention.
The glass fiber-reinforced resin composition of the present invention includes the above glass fiber of the present invention.

Description of Embodiments

Hereinafter, embodiments of the present invention will be described in detail.
The glass fiber of the present embodiment comprises a glass composition containing $SiO_2$ in a range of 92.50 to 99.99% by mass, $TiO_2$ in a range of 0.01 to 5.00% by mass, and $Al_2O_3$ in a range of 0.00 to 2.50% by mass with respect to the total amount of the glass composition, wherein the glass fiber has a tensile fracture stress in a range of 1.0 to 100.0 MPa, and the content S of $SiO_2$, the content T of $TiO_2$, and the tensile fracture stress BS of the glass fiber satisfy the following formula (1):

$$5.2 \leq BS \times (T / (100 - S))^2 \leq 33.8 \cdots (1).$$

When the glass fiber of the present invention has a glass composition with the contents of $SiO_2$, $TiO_2$, and $Al_2O_3$ in the above ranges, the glass fiber has a tensile fracture stress in the above range, and the S, T, and BS satisfy the formula (1), the glass fiver is allowed to have an ultra-low dielectric loss tangent and to have sufficient handleability, in particular, sufficient handleability in a glass fiber woven fabric.
When the content of $SiO_2$ in the glass composition constituting the glass fiber of the present embodiment is less than 92.50% by mass with respect to the total amount of the glass composition, the glass fiber fails to have a sufficiently reduced dielectric loss tangent. When the content of $SiO_2$ in the glass fiber is more than 99.99% by mass with respect to the total amount of the glass composition, the glass fiver lacks flexibility, and has deteriorated handleability, especially, deteriorated handleability in a glass fiber woven fabric.
From the viewpoint of achieving a reduced dielectric loss tangent and handleability in combination for the glass fiber, the content of $SiO_2$ in the glass composition constituting the glass fiber of the present embodiment is preferably in the range of 97.10 to 99.40% by mass, and more preferably in the range of 98.10 to 98.90% by mass with respect to the total amount of the glass composition.

When the content of $TiO_2$ in the glass composition constituting the glass fiber of the present embodiment is less than 0.01% by mass with respect to the total amount of the glass composition, the glass fiber has deteriorated handleability, especially, deteriorated handleability in a glass fiber woven fabric. When the content of $TiO_2$ in the glass fiber is more than 5.00% by mass with respect to the total amount of the glass composition, the glass fiber fails to have a sufficiently reduced dielectric loss tangent.

From the viewpoint of achieving a reduced dielectric loss tangent and handleability in combination for the glass fiber, the content of $TiO_2$ is preferably in the range of 0.11 to 3.50% by mass, more preferably in the range of 0.31 to 1.94% by mass, still more preferably in the range of 0.51 to 1.80% by mass, markedly preferably in the range of 0.71 to 1.64% by mass, particularly preferably in the range of 0.72 to 1.44% by mass, especially preferably in the range of 0.73 to 1.20% by mass, and most preferably in the range of 0.75 to 0.99% by mass with respect to the total amount of the glass composition.

When the content of $Al_2O_3$ in the glass composition constituting the glass fiber of the present embodiment is more than 2.50% by mass with respect to the total amount of the glass composition, the glass fiber fails to have a sufficiently reduced dielectric loss tangent.

From the viewpoint of achieving a reduced dielectric loss tangent and handleability in combination for the glass fiber, the content of $Al_2O_3$ is preferably in the range of 0.00 to 0.34% by mass, more preferably in the range of 0.00 to 0.24% by mass, still more preferably in the range of 0.00 to 0.20% by mass, markedly preferably in the range of 0.00 to 0.14% by mass, particularly preferably in the range of 0.00 to 0.10% by mass, especially preferably in the range of 0.00 to 0.09% by mass, and most preferably in the range of 0.01 to 0.09% by mass with respect to the total amount of the glass composition.

The glass composition constituting the glass fiber of the present embodiment may include, as impurities, oxides of Li, Na, K, Mg, Ca, B, P, Fe, Sn, Sr, Ba, Mn, Co, Ni, Cu, Cr, Mo, W, Ce, Y, La, Bi, Gd, Pr, Sc, or Yb in the range of less than 1.00% by mass in total, preferably in the range of less than 0.50% by mass in total, or more preferably in the range of less than 0.20% by mass in total with respect to the total amount of the glass composition.

Particularly when the glass composition constituting the glass fiber of the present embodiment includes $Li_2O$, $Na_2O$, $K_2O$, MgO, CaO, $B_2PO_3$, $P_2O_5$, FeO, $Fe_2O_3$, $SnO_2$, SrO, BaO, $CeO_2$, $Y_2O_3$, $La_2O_3$, $Bi_2O_3$, $Gd_2O_3$, $Pr_2O_3$, $Sc_2O_3$, or $Yb_2O_3$ as impurities, the content of each of the impurities is independently preferably in the range of less than 0.40% by mass, more preferably in the range of less than 0.20% by mass, still more preferably in the range of less than 0.10% by mass, particularly preferably in the range of less than 0.05% by mass, especially preferably in the range of less than 0.03% by mass, and most preferably in the range of less than 0.01% by mass with respect to the total amount of the glass composition.

The glass composition constituting the glass fiber of the present embodiment may include $F_2$, $Cl_2$, or $SO_3$ as impurities each independently in the range of less than 0.20% by mass, preferably in the range of less than 0.10% by mass, more preferably in the range of less than 0.05% by mass, still more preferably in the range of less than 0.03% by mass, and most preferably in the range of less than 0.01% by mass with respect to the total amount of the glass composition.

For the contents of the components of the glass composition constituting the glass fiber of the present embodiment, the content of Li as the light element can be measured with an ICP emission spectroscopic analyzer. The contents of the other elements can be measured with a wavelength dispersive X-ray fluorescence analyzer.

An example of the measurement method can be as follows. First, glass fiber is pulverized and powdered to give glass powder. When organic matter adheres to the surface of the glass fiber, or when the glass fiber is mainly included as a reinforcing material in organic matter (resin), the glass fiber is used after the organic matter is removed by, for example, heating for about 0.5 to 24 hours in a muffle furnace at a temperature of 300 to 650°C.

Next, regarding Li as a light element, the resulting glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. For the quantitative analysis using a wavelength dispersive X-ray fluorescence analyzer, specifically, specimens for calibration curve are prepared based on the measurement results from the fundamental parameter method, and the analysis can be performed by the calibration curve method. The content of each component in the specimens for calibration curve can be quantitatively analyzed by an ICP emission spectroscopic analyzer. These quantitative analysis results are converted in terms of oxides to calculate the content of each component and the total amount, and the above content (% by mass) of each component can be determined from these numerical values.

The ratio of the content of $Al_2O_3$ to the content of $TiO_2$ ($Al_2O_3/TiO_2$) in the glass composition constituting the glass fiber of the present embodiment is preferably in the range of 0.00 to 0.30, more preferably in the range of 0.00 to 0.20, still more preferably in the range of 0.00 to 0.14, and particularly preferably in the range of 0.03 to 0.12 from the viewpoint of achieving a more reduced dielectric loss tangent for the glass fiber while the handleability of the glass fiber, especially, the handleability in a glass fiber woven fabric is kept. Here, the lower the content of $Al_2O_3$, the more reduced the dielectric loss tangent of the glass fiber, but the glass fiber tends to have deteriorated handleability. When the content of $Al_2O_3$ is low, the

glass fiber has reduced viscosity at high temperature, and the glass fiber is easily fused together when fired at high temperature, resulting in the loss of the flexibility from the glass fiber. Similarly for $TiO_2$, the lower the content thereof, the more reduced the dielectric loss tangent of the glass fiber, but the glass fiber tends to have deteriorated handleability. However, the degree of the effect of the content to affect the dielectric loss tangent of the glass fiber and the handleability of the glass fiber differs from that for $Al_2O_3$. Specifically, the lower the content of $TiO_2$, the more difficult it is to suppress the generation of crystals of cristobalite in the glass fiber when the glass fiber is fired at high temperature, and this results in brittleness in the glass fiber. The ratio of the content of $Al_2O_3$ to the content of $TiO_2$ ($Al_2O_3/TiO_2$) is inferred to indicate, as a balance between those tendencies, a preferable ratio for achieving a reduced dielectric loss tangent and handleability, especially, handleability in a glass fiber woven fabric in combination for the glass fiber.

In the glass composition constituting the glass fiber of the present embodiment, the value of T / (100 - S) calculated from the content S of $SiO_2$ in the glass fiber and the content T of $TiO_2$ in the glass fiber is, for example, in the range of 0.05 to 1.00. The value of T / (100 - S) is preferably in the range of 0.55 to 0.95, more preferably in the range of 0.60 to 0.94, still more preferably in the range of 0.66 to 0.90, particularly preferably in the range of 0.72 to 0.89, and most preferably in the range of 0.78 to 0.88 from the viewpoint of achieving a reduced dielectric loss tangent and handleability in combination for the glass fiber.

When the tensile fracture stress of the glass fiber of the present embodiment is less than 1.0 MPa, it is difficult to process the glass fiber into a glass fiber product such as the glass fiber woven fabric. When the tensile fracture stress is more than 100.0 MPa, the glass fiber fails to have a sufficiently reduced dielectric loss tangent.

The tensile fracture stress of the glass fiber of the present embodiment is preferably in the range of 8.8 to 60.0 MPa, more preferably in the range of 15.0 to 55.0 MPa, and still more preferably in the range of 25.0 to 50.0 MPa from the viewpoint of achieving a reduced dielectric loss tangent and processability to form a glass fiber product in combination for the glass fiber.

The tensile fracture stress of the glass fiber of the present embodiment can be measured and calculated by the following method. When the target of measurement is a glass fiber woven fabric including the glass fiber of the present embodiment as warp yarns, four test pieces each in the form of a strip having a length of 200 mm in the warp yarn direction and a length of 25 mm in the weft yarn direction are first cut out from the glass fiber woven fabric. Then, pressure-sensitive adhesive tape is adhered to both ends of each of the test pieces in the longitudinal direction to form tabs at a tab-to-tab length of 100 mm, preparing test pieces with tabs formed thereon.

Next, the tensile strength of each test piece is measured by using a tensile tester (manufactured by Toyo Seiki Seisaku-sho, Ltd., product name: Strograph VE20D) under conditions in accordance with JIS R 3420: 2013, and the mean is calculated. With the obtained mean of tensile strength, the tensile fracture stress of the glass fiber is calculated from the following expression:

Tensile fracture stress = mean of tensile strength (unit: N/25 mm) $\times$ density (unit: $g/\mu m^3$)/mass of warp yarn per unit length (unit: $g/\mu m$)/weaving density of warp yarns (unit: yarns/25 mm).

When the target of measurement is a glass fiber woven fabric including the glass fiber of the present embodiment as weft yarns in measurement and calculation of the tensile fracture stress of the glass fiber of the present embodiment, the tensile fracture stress is calculated in the same manner as when the target of measurement is a glass fiber woven fabric including the glass fiber of the present embodiment as warp yarns, except that four test pieces each in the form of a strip having a length of 200 mm in the weft yarn direction and a length of 25 mm in the warp yarn direction are cut out from the glass fiber woven fabric.

When the target of measurement is a glass fiber woven fabric including the glass fiber of the present embodiment as warp yarns and weft yarns, the tensile fracture stress is calculated in the same manner as when the target of measurement is a glass fiber woven fabric including the glass fiber of the present embodiment as warp yarns, except that two test pieces each in the form of a strip having a length of 200 mm in the warp yarn direction and a length of 25 mm in the weft yarn direction and two test pieces each in the form of a strip having a length of 200 mm in the weft yarn direction and a length of 25 mm in the warp yarn direction are cut out from the glass fiber woven fabric.

When the target of measurement is a glass yarn or glass roving formed from the glass fiber of the present embodiment, the mean of tensile strength is calculated in the same manner as when the target of measurement is a glass fiber woven fabric formed from the glass fiber of the present embodiment, except that test pieces with tabs formed thereon by adhering pressure-sensitive adhesive tape to both ends of the glass yarn or glass roving to form tabs at a tab-to-tab length of 100 mm are used, and the tensile fracture stress is calculated from the following expression:

Tensile fracture stress = mean of tensile strength (unit: N) $\times$ density (unit: $g/\mu m^3$/ mass of glass yarn or glass roving per unit length (unit: $g/\mu m$).

The content S of $SiO_2$ in the glass composition constituting the glass fiber of the present embodiment, the content T of $TiO_2$ in the glass composition, and the tensile fracture stress BS of the glass fiber satisfy the following expression (1):

$$5.2 \leq BS \times (T / (100 - S))^2 \leq 33.8 \cdots (1).$$

When the value of $BS \times (T / (100 - S))^2$ is less than 5.2 in the glass fiber of the present embodiment, the glass fiber fails to have an ultra-low dielectric loss tangent or fails to have sufficient handleability, especially, sufficient handleability in a glass fiber woven fabric. When the value of $BS \times (T / (100 - S))^2$ is more than 33.8, on the other hand, the glass fiber of the present embodiment fails to have an ultra-low dielectric loss tangent. Here, the phrase that the glass fiber of the present embodiment has an ultra-low dielectric loss tangent means that the dielectric loss tangent of the glass fiber at a measurement frequency of 28 GHz is less than 0.0010.

The dielectric loss tangent of the glass fiber of the present embodiment at a measurement frequency of 28 GHz can be measured by the following method. When the target of measurement is a glass fiber woven fabric including the glass fiber of the present embodiment as warp yarns and weft yarns, two test pieces of 5 cm × 5 cm are cut out from separate positions in the glass fiber woven fabric. Subsequently, the test pieces are heated, for example, for about 0.5 to 24 hours in a muffle furnace at a temperature of 300 to 650°C to remove organic matter such as surface-treating agents including a silane coupling agent and a sizing agent, and moisture adhering to the surface of the glass fiber.

Thereafter, mass per unit area and density are measured for each of the resulting test pieces in accordance with JIS R 3420: 2013, and reduced thickness (unit: $\mu$m) is calculated from mass per unit area (unit: $g/\mu m^2$) / density (unit: $g/\mu m^3$). Subsequently, the volume of each test piece is calculated with the calculated reduced thickness by using a dielectric constant analyzer (manufactured by ANRITSU CORPORATION, product name: MS46122B), and resonance frequencies when the test piece is inserted and when the test piece is not inserted, and Q values when the test piece is inserted and when the test piece is not inserted are measured 8 times for each at a measurement frequency of 28 GHz, and the means of the obtained measurements are determined.

Then, by using the obtained means of measurements and calculation expressions (A) in a cylindrical cavity resonator method as shown below, the dielectric loss tangent of the glass fiber ($\tan\delta$ in Expression 1) is calculated. In the expressions (A), $\alpha$ is a perturbation constant, $f_L$ is resonance frequency when a test piece is inserted, $f_0$ is resonance frequency when a test piece is not inserted, V is the volume of a cylindrical cavity resonator, $\Delta$V is the volume of a test piece, $Q_L$ is a Q value when a test piece is inserted, and $Q_0$ is a Q value when a test piece is not inserted.

[Expression 1]

$$\varepsilon' = 1 - \frac{1}{\alpha} \frac{f_L - f_0}{f_L} \frac{V}{\Delta V}$$

$$\varepsilon'' = \frac{1}{2\alpha} \left( \frac{1}{Q_L} - \frac{1}{Q_0} \right) \frac{V}{\Delta V} \qquad \cdots (A)$$

$$\tan\delta = \varepsilon'' / \varepsilon'$$

When the target of measurement is a glass yarn or glass roving formed from the glass fiber of the present embodiment, the dielectric loss tangent of a glass fiber woven fabric obtained by weaving the glass yarn or glass roving is measured in the same manner as when the target of measurement is a glass fiber woven fabric formed from the glass fiber of the present embodiment.

When the target of measurement is a glass fiber woven fabric including a glass yarn or glass roving formed from the glass fiber of the present embodiment as part of warp yarns or weft yarns, the glass yarn or glass roving formed from the glass fiber of the present embodiment is extracted from the glass fiber woven fabric as the target of measurement, and the dielectric loss tangent of the extracted glass yarn or glass roving is measured in the same manner as when the target of measurement is a glass yarn or glass roving formed from the glass fiber of the present embodiment.

Here, the larger the value of BS, the more enhanced the handleability of the glass fiber, especially, the handleability in a glass fiber woven fabric, but the glass fiber tends to have a larger dielectric loss tangent, and as the value of BS is smaller, the glass fiber tends to have deteriorated handleability, especially, deteriorated handleability in a glass fiber woven fabric. On the other hand, the glass fiber tends to have a larger dielectric loss tangent as the value of T / (100 - S) is larger, and the glass fiber tends to have a reduced dielectric loss tangent as the value of T / (100 - S) is smaller. Reflecting those tendencies, the value of $BS \times (T / (100 - S))^2$ is inferred to indicate the balance between the handleability of the glass fiber, especially, the handleability in a glass fiber woven fabric, and the dielectric loss tangent of the glass fiber.

Preferably, the S, T, and BS of the glass fiber of the present embodiment satisfy the following formula (2):

$$9.1 \leq BS \times (T / (100 - S))^2 \leq 33.5 \cdots (2).$$

When the S, T, and BS of the glass fiber of the present embodiment satisfy the formula (2), the glass fiber is allowed to more reliably have an ultra-low dielectric loss tangent and to have excellent handleability, especially, excellent handleability in a glass fiber woven fabric.

More preferably, the S, T, and BS of the glass fiber of the present embodiment satisfy the following formula (3):

$$20.1 \leq BS \times (T / (100 - S))^2 \leq 33.1 \cdots (3).$$

When the S, T, and BS of the glass fiber of the present embodiment satisfy the formula (3), the glass fiber is allowed to have a particularly ultra-low dielectric loss tangent and to have excellent handleability, especially, excellent handleability in a glass fiber woven fabric. Here, the phrase that the glass fiber of the present embodiment has a particularly ultra-low dielectric loss tangent means that the dielectric loss tangent of the glass fiber at a measurement frequency of 28 GHz is 0.0005 or less.

The glass fiber of the present embodiment can be formed, for example, as follows. First, a glass raw material is prepared so as to have a mother glass composition on the basis of components contained in ores to be used for a glass raw material and the contents thereof, and the amounts of the components to volatilize in the melting process. The mother glass composition for the glass fiber of the present embodiment includes $SiO_2$ in the range of 45.0 to 65.0% by mass, $Al_2O_3$ in the range of 5.0 to 20.0% by mass, $TiO_2$ in the range of 0.1 to 3.0% by mass, and CaO, MgO, SrO, $B_2O_3$, and $ZrO_2$ in the range of 10 to 40% by mass in total, wherein the ratio of the content of CaO to the total content of CaO, MgO, SrO, $B_2O_3$, and $ZrO_2$ is in the range of 0.10 to 1.00.

Next, the glass raw material (glass batch) prepared is supplied to a melting furnace, and is melted at a temperature range of 1000 poise temperature or more, specifically, a temperature range of 1450 to 1650°C. Subsequently, the glass batch melted at the temperature range (molten glass) is discharged from 10 to 8000 nozzle tips or holes of a bushing controlled at a predetermined temperature. The molten glass discharged is then cooled while stretched by winding at high speed to be solidified into glass single fiber (glass filament), and the resulting glass filaments are bundled into one or more bundles; thus, a glass fiber bundle (glass strand) is obtained.

Next, the glass strand obtained is further subjected to various known processings, giving any of glass fiber products having the mother glass composition in various forms such as yarns, woven fabrics, knitted fabrics, non-woven fabrics including chopped strand mats and multiaxial non-woven fabrics, chopped strands, robings, and powders.

Subsequently, the glass fiber product having the mother glass composition is treated with an acid solution by placing in the acid solution to elute non-$SiO_2$ components constituting the mother glass composition, giving acid-elution-treated glass fiber. Here, an acid having a pH of 3.0 or less can be used for the acid solution, and examples of the acid can include nitric acid, hydrochloric acid, and sulfuric acid. The concentration of the acid solution is preferably 0.2 to 20.0% by mass.

Examples of methods for treating the glass fiber product with the acid solution can include a method of placing the glass fiber product in the acid solution and stirring or circulating the acid solution. When the acid solution is stirred, the stirring speed is preferably in the range of 0.2 to 20 rps. When the acid solution is circulated, the flow rate is preferably in the range of 0.5 to 50 L/min. The ratio of the mass of the glass fiber product to the volume of the acid solution in treating the glass fiber product with the acid solution is preferably in the range of 1.0 to 10.0 (g/L).

The treatment temperature in treating the glass fiber product with the acid solution is preferably a temperature in the range of 40 to 95°C. The treatment time in treating the glass fiber product with the acid solution is preferably a time period in the range of 3 to 3000 minutes.

Then, the acid-elution-treated glass fiber is subjected to firing treatment to give the glass fiber of the present embodiment. The firing treatment can be performed, for example, in such a manner that the acid-elution-treated glass fiber is left in a heater, the temperature is increased from room temperature to a firing temperature in the range of 600 to 1200°C at a temperature increase rate of 1.0 to 100.0°C/min, firing is performed at the firing temperature over a firing time in the range of 0.8 to 80 hours, and the temperature is decreased from the firing temperature to room temperature at a temperature decrease rate of 1.0 to 100.0°C/min.

The value of T / (100 - S) described above in the glass composition constituting the glass fiber of the present embodiment can be controlled through the mother glass composition, the specific surface area of the glass fiber product having the mother glass composition, and the treatment temperature and treatment time in the treatment with the acid solution. For example, the value of T / (100 - S) can be increased by increasing the $TiO_2$ content of the mother glass composition or decreasing the ratio of the content of CaO to the total content of CaO, MgO, SrO, $B_2O_3$, and $ZrO_2$ in the

mother glass composition. Alternatively, for example, the value of T / (100 - S) can be increased by employing a small diameter for the glass filaments constituting the glass fiber product having the mother glass composition to give a large specific surface area to the glass fiber product. Furthermore, the value of T / (100 - S) can be increased by increasing the acid treatment temperature.

The tensile fracture stress BS of the glass fiber of the present embodiment can be controlled through the specific surface area of the glass fiber product having the mother glass composition, the firing temperature and firing time in the firing treatment, and the value of T / (100 - S) described above. For example, the tensile fracture stress BS can be decreased by employing a small diameter for the glass filaments constituting the glass fiber product having the mother glass composition to give a large specific surface area to the glass fiber product. Alternatively, the tensile fracture stress BS can be decreased by increasing the firing temperature and extending the firing time. Furthermore, the tensile fracture stress BS can be decreased by decreasing the value of T / (100 - S).

Each glass filament constituting the glass fiber of the present embodiment typically has a perfect circle cross-sectional shape and has a diameter in the range of 2.0 to 35.0 $\mu$m. In applications that require a low dielectric loss tangent, the glass filament preferably has a diameter in the range of 2.5 to 9.0 $\mu$m, more preferably a diameter in the range of 2.8 to 6.0 $\mu$m, and still more preferably a diameter in the range of 3.0 to 4.5 $\mu$m.

When the glass filament has an elliptical or long-oval cross-sectional shape, the ratio of the major axis to the minor axis of the cross-sectional shape (major axis/minor axis) is, for example, in the range of 2.0 to 10.0 and the fiber diameter (converted fiber diameter) when the cross-sectional area is converted to a perfect circle is, for example, in the range of 2.0 to 35.0 $\mu$m.

The glass fiber of the present embodiment typically has a shape of a glass fiber bundle (glass strand) in which the above glass filaments in the range of 10 to 8000 filaments are bundled, and has a mass per unit length in the range of 0.3 to 10000.0 tex (g/km). In applications that require a low dielectric loss tangent, the glass fiber of the present embodiment is preferably composed of the above glass filaments bundled in the range of 20 to 450 filaments and has a mass per unit length in the range of 0.5 to 90.0 tex. The glass fiber of the present embodiment is more preferably composed of the above glass filaments bundled in the range of 35 to 410 filaments and has a mass per unit length in the range of 0.9 to 69.0 tex. The glass fiber of the present embodiment is still more preferably composed of the above glass filaments bundled in the range of 40 to 250 filaments and has a mass per unit length in the range of 1.0 to 15.0 tex. The glass fiber of the present embodiment is particularly preferably composed of the above glass filaments bundled in the range of 50 to 220 filaments and has a mass per unit length in the range of 1.1 to 7.0 tex.

The glass fiber of the present embodiment may be coated with an organic matter on the surface thereof for the purposes such as improvement of adhesiveness between the glass fiber and a resin, and improvement of uniform dispersibility of the glass fiber in a mixture of the glass fiber and resin or inorganic material. Examples of such an organic matter can include starch, urethane resins, epoxy resins, vinyl acetate resins, acrylic resins, modified polypropylene (particularly carboxylic acid-modified polypropylene), and a copolymer of (poly)carboxylic acid (particularly maleic acid) and an unsaturated monomer. The glass fiber of the present embodiment may be coated with the resin composition including a silane coupling agent, a lubricant, surfactant, and the like in addition to these resins. The glass fiber of the present embodiment may be coated with the treating agent composition not including the above resins and including a silane coupling agent, surfactant, and the like.

Such a resin composition or treating agent composition covers the glass fiber at a rate in the range of 0.03 to 2.0% by mass based on the mass of the glass fiber of the present embodiment in a state where it is not coated with the resin composition or the treating agent composition. The glass fiber can be coated with an organic matter by applying a solution of the resin (hereinafter, referred to as the resin solution) or a solution of the resin composition (hereinafter, referred to as the resin composition solution) to the glass fiber of the present embodiment in the form of a thread such as a yarn and a robing using a known method such as a roller applicator for the glass fiber and then drying the glass fiber to which the resin solution or the resin composition solution is applied.

The glass fiber can be coated with an organic matter also by immersing the glass fiber of the present embodiment in the form of a woven fabric in a solution of the treating agent composition (hereinafter, referred to as the treating agent composition solution) and then drying the glass fiber to which the treating agent composition solution is applied.

The glass fiber can be coated with an organic matter also by immersing the glass fiber of the present embodiment in the form of a chopped strand or powder in the resin solution or the resin composition solution, stirring the resultant, and then drying the glass fiber to which the resin solution or the resin composition solution is applied.

The glass fiber can be coated with an organic matter also by immersing the glass fiber of the present embodiment in the form of a knitted fabric or non-woven fabric in the resin solution, the resin composition solution, or the treating agent composition solution and then drying the glass fiber to which the resin solution, the resin composition solution, or the treating agent composition solution is applied.

Here, examples of the silane coupling agent can include aminosilanes, chlorosilanes, epoxysilane, mercaptosilanes, vinylsilanes, and (meth)acrylsilanes. In the present embodiment, the silane coupling agents may be used singly or in combination of two or more.

Examples of the aminosilane can include γ-aminopropyltriethoxysilane, N-β-(aminoethyl)-γ-aminopropyltrimethoxysilane, N-β-(aminoethyl)-N'-β-(aminoethyl)-γ-aminopropyltrimethoxysilane, and γ-anilinopropyltrimethoxysilane.

Examples of the chlorosilane can include γ-chloropropyltrimethoxysilane.

Examples of the epoxysilane can include β-(3,4-epoxycyclohexyl)ethyltrimethoxysilane and γ-glycidoxypropyltrimethoxysilane.

Examples of the mercaptosilane can include γ-mercaptotrimethoxysilane.

Examples of the vinylsilane can include vinyl trimethoxysilane and N-β-(N-vinylbenzylaminoethyl)-γ-aminopropyltrimethoxysilane.

Examples of the (meth)acrylsilane can include γ-methacryloxypropyltrimethoxysilane.

Examples of the lubricant can include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. In the present embodiment, the lubricants may be used singly or in combination of two or more.

Examples of the animal oil can include beef tallow.

Examples of the vegetable oil can include soybean oil, coconut oil, rapeseed oil, palm oil, and castor oil.

Examples of the animal wax can include beeswax and lanolin.

Examples of the vegetable wax can include candelilla wax and carnauba wax.

Examples of the mineral wax can include paraffin wax and montan wax.

Examples of the condensate of a higher saturated fatty acid and a higher saturated alcohol can include stearates such as lauryl stearate.

Examples of the fatty acid amide can include dehydrated condensates of a polyethylenepolyamine such as diethylenetriamine, triethylenetetramine, or tetraethylenepentamine and a fatty acid such as lauric acid, myristic acid, palmitic acid, or stearic acid.

Examples of the quaternary ammonium salt can include alkyltrimethylammonium salts such as lauryltrimethylammonium chloride.

Examples of the surfactant can include nonionic surfactants, cationic surfactants, anionic surfactants, and amphoteric surfactants. In the present embodiment, the surfactants may be used singly or in combination of two or more.

Examples of the nonionic surfactant can include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine salts, adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt. Examples of the higher alkylamine salts can include acetates and hydrochlorides.

Examples of the anionic surfactant can include higher alcohol sulfate salts, higher alkyl ether sulfate salts, α-olefin sulfate salts, alkylbenzene sulfonate salts, α-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct.

Examples of the amphoteric surfactant can include amino acid amphoteric surfactants, betaine amphoteric surfactants, and imidazoline amphoteric surfactants. Examples of the amino acid amphoteric surfactants can include alkali metal salts of alkylaminopropionic acid. Examples of the betaine amphoteric surfactant can include alkyldimethylbetaine.

The glass fiber woven fabric of the present embodiment can be obtained by using a glass fiber woven fabric having the mother glass composition as the glass fiber product having the mother glass composition in the above method for obtaining the glass fiber of the present embodiment. The glass fiber woven fabric of the present embodiment can be obtained in such a manner that a glass yarn formed from the glass fiber of the present embodiment is obtained by using a glass yarn having the mother glass composition as the glass fiber product having the mother glass composition in the above method for obtaining the glass fiber of the present embodiment, and the glass yarn is woven as at least a part of warp yarns or weft yarns by using a loom known per se.

Examples of the loom may include jet looms such as air jet or water jet looms, shuttle looms, and rapier looms.

Preferably, the warp yarns and weft yarns in the glass fiber woven fabric of the present embodiment are totally formed from the above glass fiber of the present embodiment.

Examples of the fabric construction of the glass fiber woven fabric of the present embodiment can include plain weaving, satin weaving, mat weaving, and twill weaving. From the viewpoint of the handleability of the glass fiber woven fabric, plain weaving is preferred.

In the glass fiber woven fabric of the present embodiment, the above glass fiber of the present embodiment is preferably formed by bundling glass filaments in the range of 35 to 410 filaments, each having a filament diameter in the range of 2.5 to 9.0 $\mu$m, has a number of twists in the range of 0 to 1.0 twist/25 mm, and has a mass per unit length in the range of 0.9 to 69.0 tex (g/1000 m).

In the glass fiber woven fabric of the present embodiment, when the above glass fiber of the present embodiment is included as warp yarns or weft yarns, the warp yarn weaving density is preferably in the range of 40 to 130 yarns/25 mm, and the weft yarn weaving density is preferably in the range of 40 to 130 yarns/25 mm.

The glass fiber woven fabric of the present embodiment, may be subjected to surface treatment, and opening treatment.

An example of the surface treatment can be a treatment including immersing the glass fiber woven fabric in a solution including the silane coupling agent or including the silane coupling agent and the surfactant, squeezing extra water therefrom, and heat-drying the woven fabric at a temperature in the range of 80 to 180°C for a time period in the range of 1 to 30 minutes.

An example of the opening treatment can be a treatment in which the warp yarns of the glass fiber woven fabric are subjected to opening by means of water flow pressure, opening by means of high-frequency vibration using a liquid as a medium, opening by means of the pressure of a fluid having a surface pressure, opening by means of pressing with a roll, or the like under a tension in the range of 30 to 200 N to thereby widen the width of the warp yarns and weft yarns.

The glass fiber woven fabric of the present embodiment has a mass in the range of 6.0 to 180.0 g/m$^2$ and preferably has a thickness in the range of 7.0 to 150.0 $\mu$m. The glass fiber woven fabric of the present embodiment has a mass in the range of 7.0 to 80.0 g/m$^2$ and more preferably has a thickness in the range of 8.0 to 80.0 $\mu$m.

The yarn width of the warp yarns of the glass fiber woven fabric of the present embodiment is preferably in the range of 90 to 500 $\mu$m and the yarn width of the weft yarns thereof is preferably in the range of 90 to 500 $\mu$m.

The glass fiber woven fabric of the present embodiment may comprise a surface treatment layer including the silane coupling agent or the silane coupling agent and the surfactant. When the glass fiber woven fabric of the present embodiment includes the surface treatment layer, the surface treatment layer preferably has a mass in the range of 0.03 to 1.50% by mass, for example, with respect to the total amount of the glass fiber woven fabric including the surface treatment layer.

The glass fiber-reinforced resin composition of the present embodiment includes the above glass fiber of the present embodiment. Specifically, the glass fiber-reinforced resin composition of the present embodiment includes in the range of 10 to 90% by mass of glass fiber with respect to the total amount of the glass fiber-reinforced resin composition, as the glass fiber-reinforced resin composition including thermoplastic resin or thermosetting resin, glass fiber, and other additives. The glass fiber-reinforced resin composition of the present embodiment includes a resin in the range of 90 to 10% by mass and includes other additives in the range of 0 to 40% by mass with respect to the total amount of the glass fiber-reinforced resin composition.

Examples of the above thermoplastic resin can include polyethylene, polypropylene, polystyrene, styrene/-maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl etherketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and polylactic acid.

Examples of the polyethylene can include high density polyethylene (HDPE), medium density polyethylene, low density polyethylene (LDPE), linear low density polyethylene (LLDPE), and ultra high molecular weight polyethylene.

Examples of the polypropylene can include isotactic polypropylene, atactic polypropylene, syndiotactic polypropylene, and mixtures thereof.

Examples of the polystyrene can include general-purpose polystyrene (GPPS), which is an atactic polystyrene having an atactic structure, high impact polystyrene (HIPS) with a rubber component added to GPPS, and syndiotactic polystyrene with syndiotactic structure.

Examples of the methacrylic resin can include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride can include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (Nylon 1012), polyundecanamide (Nylon 11), polyundecamethylene adipamide (Nylon 116), polydodecanamide (Nylon 12), polyxylene adipamide (nylon XD6), polyxylene sebacamide (nylon XD10), polymetaxylylene adipamide (nylon MXD6), polyparaxylylene adipamide (nylon PXD6), polytetramethylene terephthalamide (nylon 4T), polypentamethylene terephthalamide (nylon 5T), polyhexamethylene terephthalamide (nylon 6T), polyhexamethylene isophthalamide (nylon 6I), polynonamethylene terephthalamide (nylon 9T), polydecamethylene terephthalamide (nylon 10T), polyundecamethylene terephthalamide (nylon 11T), polydodecamethylene terephthalamide (nylon 12T), polytetramethylene isophthalamide (nylon 4I), polybis(3-methyl-4-aminohexyl) methane terephthalamide (nylon PACMT), polybis(3-methyl-4-aminohexyl) methane isophthalamide (nylon PACMI), polybis(3-methyl-4-aminohexyl) methane dodecamide (nylon PACM12), and polybis(3-methyl-4-aminohexyl) methane tetradecamide (nylon PACM14) or copolymers or mixtures of two or more of the components.

Examples of the polyacetal can include a homopolymer with oxymethylene units as the main repeating unit, and a copolymer mainly consisting of oxymethylene units and containing oxyalkylene units having 2 to 8 adjacent carbon atoms in the main chain.

Examples of the polyethylene terephthalate can include a polymer obtained by polycondensation of terephthalic acid or a derivative thereof with ethylene glycol.

Examples of the polybutylene terephthalate can include a polymer obtained by polycondensation of terephthalic acid or a derivative thereof with 1,4-butanediol.

Examples of the polytrimethylene terephthalate can include polymers obtained by polycondensation of terephthalic acid or a derivative thereof with 1,3-propanediol.

Examples of the polycarbonate can include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide can include linear polyphenylene sulfide, cross linked polyphenylene sulfide having a high molecular weight obtained by performing a curing reaction after polymerization, polyphenylene sulfide sulfone, polyphenylene sulfide ether, and polyphenylene sulfide ketone.

Examples of the polyphenylene ether can include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly[2-(4'-methylphenyl)-1,4-phenylene ether], poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), and poly(2,6-dimethyl-1,4-phenylene ether).

Examples of the modified polyphenylene ether can include: a polymer alloy of poly(2,6-dimethyl-1,4-phenylene) ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; a polymer alloy of poly(2,6-dimethyl-1,4-phenylene)ether and styrene/butadiene/acrylonitrile copolymer; one obtained by introducing a functional group such as an amino group, an epoxy group, a carboxy group, a styryl group, or the like at the polymer chain end of the polyphenylene ether; and one obtained by introducing a functional group such as an amino group, an epoxy group, a carboxy group, a styryl group, a methacryl group, or the like at the polymer chain side chain of the polyphenylene ether.

Examples of the polyaryl etherketone can include polyetherketone (PEK), polyetheretherketone (PEEK), polyetherketoneketone (PEKK), and polyetheretherketoneketone (PEEKK).

Examples of the liquid crystal polymer (LCP) can include a polymer (copolymer) consisting of one or more structural units selected from aromatic hydroxycarbonyl units which are thermotropic liquid crystal polyesters, aromatic dihydroxy units, aromatic dicarbonyl units, aliphatic dihydroxy units, aliphatic dicarbonyl units, and the like.

Examples of the fluororesin can include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin can include copolymers of an olefin or a styrene and an unsaturated carboxylic acid, wherein a part of carboxy groups is neutralized with a metal ion.

Examples of the olefin/vinyl alcohol resin can include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin can include monocyclic compounds such as cyclohexene, polycyclic compounds such as tetracyclopentadiene, and polymers of cyclic olefin monomers.

Examples of the polylactic acid can include poly-L-lactic acid which is a homopolymer of L-form, poly-D-lactic acid which is a homopolymer of D-form, or a stereocomplex polylactic acid which is a mixture thereof.

Examples of the cellulose resin can include methylcellulose, ethyl cellulose, hydroxycellulose, hydroxymethylcellulose, hydroxyethyl cellulose, hydroxyethyl methylcellulose, hydroxypropylmethylcellulose, cellulose acetate, cellulose propionate, and cellulose butyrate.

Examples of the above thermosetting resin can include unsaturated polyester resins, vinyl ester resins, epoxy (EP) resins, melamine (MF) resins, phenol resins (PF), urethane resins (PU), polyisocyanate, polyisocyanurate, polyimide (PI), urea (UF) resins, silicone (SI) resins, furan (FR) resins, benzoguanamine (BR) resins, alkyd resins, xylene resins, bismaleimide triazine (BT) resins, diallyl phthalate resin (PDAP), thermosetting polyphenylene ether, and thermosetting modified polyphenylene ether.

Examples of the unsaturated polyester resin can include resin which is obtained by esterification reaction of aliphatic unsaturated dicarboxylic acid and aliphatic diol.

Examples of the vinyl ester resin can include bis vinyl ester resins and novolac vinyl ester resins.

Examples of the epoxy resin can include bisphenol A epoxy resins, bisphenol F epoxy resins, bisphenol E epoxy resins, bisphenol S epoxy resins, bisphenol M epoxy resins (4,4'-(1,3-phenylenediisopropylidene)bisphenol epoxy resins), bisphenol P epoxy resins (4,4'-(1,4-phenylenediisopropylidene)bisphenol epoxy resins), bisphenol Z epoxy resins (4,4'-cyclohexylidne bisphenol epoxy resins), phenol novolac epoxy resins, cresol novolac epoxy resins, tetraphenol group ethane novolac type epoxy resins, novolac epoxy resins having a condensed ring aromatic hydrocarbon structure, biphenyl epoxy resins, aralkyl epoxy resins such as xylylene epoxy resins and phenyl aralkyl epoxy resins, naphthylene ether epoxy resins, naphthol epoxy resins, naphthalene diol epoxy resins, bifunctional or tetrafunctional epoxy naphthalene resins, binaphthyl epoxy resins, naphthalene aralkyl epoxy resins, anthracene epoxy resins, phenoxy epoxy resins, dicyclopentadiene epoxy resins, norbornene epoxy resins, adamantane epoxy resins, and fluorene epoxy resins.

Examples of the melamine resin can include a polymer formed by polycondensation of melamine (2,4,6-triamino-1,3,5-triazine) and formaldehyde.

Examples of the phenolic resin can include novolac phenolic resins such as phenol novolac resins, cresol novolac resins, and bisphenol A novolac resins, resol phenol resins such as methylol resole resins and dimethylene ether resole resins, or aryl alkylene phenol resins, and include one of these or combinations of two or more.

Examples of the urea resin can include a resin obtained by condensation of urea and formaldehyde.

The above thermoplastic resin or the above thermosetting resin may be used singly or in combinations of two or more.

The glass fiber-reinforced resin composition of the present embodiment is used in applications that require low dielectric loss tangent. Thus, as the resin, preferred are epoxy resins, modified polyphenylene ethers, thermosetting modified polyphenylene ether, polybutylene terephthalate, polypropylene, fluorine resins, and liquid crystal polymer (LCP).

Examples of the above other additives can include reinforcing fiber other than glass fiber, a filler other than glass fiber, a flame retardant, an UV absorber, a heat stabilizer, an antioxidant, an antistatic agent, a fluidity improver, an anti-blocking agent, a lubricant, a nucleating agent, an antibacterial agent, and pigment.

Examples of the reinforcing fiber other than glass fiber can include carbon fiber and metal fiber.

Examples of the filler other than glass fiber can include glass powder, talc, and mica.

The glass fiber-reinforced resin composition of the present embodiment may be prepreg obtained by impregnating the glass fiber woven fabric of the present embodiment with the resin by a known method per se and semi-curing the woven fabric.

The glass fiber-reinforced resin composition of the present embodiment can be molded by known molding methods such as injection molding method, injection compression molding method, two-color molding method, hollow molding method, foam molding method (including supercritical fluid), insert molding method, in-mold coating molding method, extrusion molding method, sheet molding method, thermoforming method, rotational molding method, laminate molding method, press molding method, blow molding method, stamping molding method, infusion method, hand lay-up method, spray-up method, resin transfer molding method, sheet molding compound method, bulk molding compound method, pultrusion method, and filament winding method to obtain various glass fiber-reinforced resin molded products. Curing the prepreg can also provide glass fiber-reinforced resin molded products.

Examples of applications of such molded products can include electronic device housing, electronic components, vehicle exterior parts, vehicle interior parts, vehicle engine parts, muffler parts, and high pressure tanks.

Examples of the electronic components can include printed wiring boards.

Examples of the vehicle exterior parts can include bumpers, fenders, bonnets, air dams, wheel covers, and radomes.

Examples of the vehicle interior parts can include door trims and ceiling materials.

Examples of the vehicle engine parts can include oil pans, engine covers, intake manifolds, and exhaust manifolds.

Examples of the muffler parts can include heat-resistant sound-deadening members, dust removal filters, and catalyst-supporting materials.

The glass fiber of the present embodiment can be suitably used as a reinforcing material for inorganic materials such as gypsum and cement, in addition to the glass fiber-reinforced resin composition of the present embodiment. For example, when used as a reinforcing material for gypsum (especially, a gypsum board having a thickness of 4 to 60 mm), the glass fiber comprising the glass composition in the above range can be included in a range of 0.1 to 4.0% by mass with respect to the total mass of gypsum.

Examples and Comparative Examples of the present invention will be shown.

Examples

[Example 1]

First prepared was a glass fiber woven fabric including a glass yarn of 21.0 tex with 204 glass filaments bundled together as warp yarns and weft yarns, wherein each glass filament had composition A shown in Table 1 as a mother glass composition and had a diameter of 7.0 $\mu$m, and having a warp yarn weaving density of 59 yarns/25 mm, a weft yarn weaving density of 57 yarns/25 mm, a thickness of 90 $\mu$m, and a mass per unit area of 97 g/m$^2$ (hereinafter, referred to as glass fiber woven fabric A).

Next, glass fiber woven fabric A was placed in a liquid tank containing nitric acid having a concentration of 6.3% by mass as an acid solution, and subjected to acid elution treatment at an elution temperature of 60°C for an elution time of 180 minutes while the acid solution was stirring, giving an acid-elution-treated glass fiber woven fabric. At that time, the ratio of the mass of glass fiber woven fabric A to the capacity of the liquid tank was 5.0 g/L.

Subsequently, the acid-elution-treated glass fiber woven fabric was left in a muffle furnace, the temperature was increased from room temperature to a firing temperature of 950°C at a temperature increase rate of 3.3°C/min, firing was performed at the firing temperature for a firing time of 24 hours, and the temperature was then decreased from the firing temperature to room temperature at a temperature decrease rate of 3.3°C/min; thus, a glass fiber woven fabric of the present example was obtained.

The glass fiber woven fabric of the present example thus obtained was such that the diameter of the glass filaments constituting the warp yarns and weft yarns was 5.8 $\mu$m, the mass per unit length of the warp yarns and weft yarns was 12.0 tex, the warp yarn weaving density was 69 yarns/25 mm, the weft yarn weaving density was 66 yarns/25 mm, the thickness was 84 $\mu$m, and the mass per unit area was 75 g/m$^2$.

The glass composition, tensile fracture stress, and dielectric loss tangent of the glass fiber woven fabric of the present example were measured by the above methods. The results are shown in Table 2.

In addition, the handleability of the glass fiber of the glass fiber woven fabric of the present example was evaluated on the basis of criteria shown below. The glass fiber woven fabric was cut to give a piece of 10 cm × 10 cm in size, the piece was held on a pair of edges thereof and bent at 180° around the center part. If the glass fiber woven fabric recovered the original shape after that, the glass fiber woven fabric was rated as A. If the cut piece of the glass fiber woven fabric did not recover the original shape after bending it at 180° around the center part or tore at the bent part, the glass fiber woven fabric was rated as B. If the cut piece of the glass fiber woven fabric broke before completion of bending in bending at 180° around the center part, the glass fiber woven fabric was rated as C. The result is shown in Table 2.

[Example 2]

A glass fiber woven fabric of the present example was obtained completely in the same manner as in Example 1 except that the firing temperature was 1100°C and the firing time was 1 hour in firing the acid-elution-treated glass fiber woven fabric.

The glass fiber woven fabric of the present example thus obtained was such that the diameter of the glass filaments constituting the warp yarns and weft yarns was 5.8 $\mu$m, the mass per unit length of the warp yarns and weft yarns was 12.0 tex, the warp yarn weaving density was 69 yarns/25 mm, the weft yarn weaving density was 66 yarns/25 mm, the thickness was 84 $\mu$m, and the mass per unit area was 75 g/m$^2$.

The glass composition, tensile fracture stress, and dielectric loss tangent of the glass fiber woven fabric of the present example were measured by the above methods. In addition, the handleability of the glass fiber was evaluated completely in the same manner as in Example 1. The results are shown in Table 2.

[Example 3]

First prepared was a glass fiber woven fabric including a glass yarn of 10 tex with 204 glass filaments bundled together as warp yarns and weft yarns, wherein each glass filament had composition A shown in Table 1 as a mother glass composition and had a diameter of 4.8 $\mu$m, and having a warp yarn weaving density of 53 yarns/25 mm, a weft yarn weaving density of 53 yarns/25 mm, a thickness of 50 $\mu$m, and a mass per unit area of 45 g/m$^2$ (hereinafter, referred to as glass fiber woven fabric B).

Next, glass fiber woven fabric B was placed in a liquid tank containing nitric acid having a concentration of 6.3% by mass as an acid solution, and subjected to acid elution treatment at an elution temperature of 50°C for an elution time of 360 minutes while the acid solution was stirring, giving an acid-elution-treated glass fiber woven fabric. At that time, the ratio of the mass of glass fiber woven fabric B to the capacity of the liquid tank was 2.5 g/L.

Subsequently, the acid-elution-treated glass fiber woven fabric was left in a muffle furnace, the temperature was increased from room temperature to a firing temperature of 900°C at a temperature increase rate of 3.3°C/min, firing was performed at the firing temperature for a firing time of 24 hours, and the temperature was then decreased from the firing temperature to room temperature at a temperature decrease rate of 3.3°C/min; thus, a glass fiber woven fabric of the present example was obtained.

The glass fiber woven fabric of the present example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present example were measured by the above methods. In addition, the handleability of the glass fiber was evaluated completely in the same manner as in Example 1. The results are shown in Table 2.

[Example 4]

A glass fiber woven fabric of the present example was obtained completely in the same manner as in Example 3 except that the elution temperature was 60°C and the ratio of the mass of glass fiber woven fabric B to the capacity of the liquid tank was 5.0 g/L in the acid elution treatment, and that the firing temperature was 850°C and the firing time was 48 hours in firing the acid-elution-treated glass fiber woven fabric.

The glass fiber woven fabric of the present example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present example were measured by the above methods. In addition, the handleability of the glass fiber was evaluated completely in the same manner as in Example 1. The results are shown in Table 2.

[Example 5]

A glass fiber woven fabric of the present example was obtained completely in the same manner as in Example 3 except that the elution temperature was 60°C and the ratio of the mass of glass fiber woven fabric B to the capacity of the liquid tank was 5.0 g/L in the acid elution treatment, and that the firing temperature was 870°C and the firing time was 48 hours in firing the acid-elution-treated glass fiber woven fabric.

The glass fiber woven fabric of the present example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present example were measured by the above methods. In addition, the handleability of the glass fiber was evaluated completely in the same manner as in Example 1. The results are shown in Table 2.

[Example 6]

A glass fiber woven fabric of the present example was obtained completely in the same manner as in Example 1 except that the elution time was 360 minutes in the acid elution treatment, and that the firing temperature was 900°C.

The glass fiber woven fabric of the present example thus obtained was such that the diameter of the glass filaments constituting the warp yarns and weft yarns was 5.8 $\mu$m, the mass per unit length of the warp yarns and weft yarns was 12.0 tex, the warp yarn weaving density was 69 yarns/25 mm, the weft yarn weaving density was 66 yarns/25 mm, the thickness was 84 $\mu$m, and the mass per unit area was 75 g/m$^2$.

The glass composition, tensile fracture stress, and dielectric loss tangent of the glass fiber woven fabric of the present example were measured by the above methods. In addition, the handleability of the glass fiber was evaluated completely in the same manner as in Example 1. The results are shown in Table 2.

[Example 7]

A glass fiber woven fabric of the present example was obtained completely in the same manner as in Example 3 except that the elution temperature was 60°C in the acid elution treatment.

The glass fiber woven fabric of the present example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present example were measured by the above methods. In addition, the handleability of the glass fiber was evaluated completely in the same manner as in Example 1. The results are shown in Table 2.

[Comparative Example 1]

A glass fiber woven fabric of the present comparative example was obtained completely in the same manner as in Example 4 except that the firing temperature was 800°C and the firing time was 72 hours in firing the acid-elution-treated glass fiber woven fabric.

The glass fiber woven fabric of the present comparative example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present comparative example were measured by the above methods. In addition, the handleability of the glass fiber was evaluated completely in the same manner as in Example 1. The results are shown in Table 3.

[Comparative Example 2]

A glass fiber woven fabric of the present comparative example was obtained completely in the same manner as in Example 4 except that the firing temperature was 900°C and the firing time was 24 hours in firing the acid-elution-treated glass fiber woven fabric.

The glass fiber woven fabric of the present comparative example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present comparative example were measured by the above methods. In addition, the handleability of the glass fiber was evaluated completely in the same manner as in Example 1. The results are shown in Table 3.

[Comparative Example 3]

A glass fiber woven fabric of the present comparative example was obtained completely in the same manner as in Example 3 except that the elution temperature was 40°C in the acid elution treatment.

The glass fiber woven fabric of the present comparative example thus obtained was such that the diameter of the glass filaments constituting the warp yarns and weft yarns was 4.3 $\mu$m, the mass per unit length of the warp yarns and weft yarns was 6.5 tex, the warp yarn weaving density was 61 yarns/25 mm, the weft yarn weaving density was 61 yarns/25 mm, the thickness was 40 $\mu$m, and the mass per unit area was 34 g/m$^2$.

The glass composition, tensile fracture stress, and dielectric loss tangent of the glass fiber woven fabric of the present comparative example were measured by the above methods. In addition, the handleability of the glass fiber was evaluated completely in the same manner as in Example 1. The results are shown in Table 3.

[Comparative Example 4]

First prepared was a glass fiber woven fabric including a glass yarn of 22 tex with 204 glass filaments bundled together as warp yarns and weft yarns, wherein each glass filament had composition B shown in Table 1 as a mother glass composition and had a diameter of 7.4 $\mu$m, and having a warp yarn weaving density of 59 yarns/25 mm, a weft yarn weaving density of 57 yarns/25 mm, a thickness of 90 $\mu$m, and a mass per unit area of 101 g/m$^2$ (hereinafter, referred to as glass fiber woven fabric C).

Next, glass fiber woven fabric C was placed in a liquid tank containing nitric acid having a concentration of 6.3% by mass as an acid solution, and subjected to acid elution treatment at an elution temperature of 60°C for an elution time of 2880 minutes while the acid solution was stirring, giving an acid-elution-treated glass fiber woven fabric. At that time, the ratio of the mass of glass fiber woven fabric C to the capacity of the liquid tank was 5.0 g/L.

Subsequently, the acid-elution-treated glass fiber woven fabric was left in a muffle furnace, the temperature was increased from room temperature to a firing temperature of 900°C at a temperature increase rate of 3.3°C/min, firing was performed at the firing temperature for a firing time of 24 hours, and the temperature was then decreased from the firing temperature to room temperature at a temperature decrease rate of 3.3°C/min; thus, a glass fiber woven fabric of the present comparative example was obtained.

The glass fiber woven fabric of the present comparative example thus obtained was such that the diameter of the glass filaments constituting the warp yarns and weft yarns was 6.3 $\mu$m, the mass per unit length of the warp yarns and weft yarns was 14 tex, the warp yarn weaving density was 68 yarns/25 mm, the weft yarn weaving density was 65 yarns/25 mm, the thickness was 87 $\mu$m, and the mass per unit area was 79 g/m$^2$.

The glass composition, tensile fracture stress, and dielectric loss tangent of the glass fiber woven fabric of the present comparative example were measured by the above methods. In addition, the handleability of the glass fiber was evaluated completely in the same manner as in Example 1. The results are shown in Table 3.

[Comparative Example 5]

A glass fiber woven fabric of the present comparative example was obtained completely in the same manner as in Comparative Example 4 except that nitric acid having a concentration of 18.0% by mass was used as an acid solution and the elution time was 360 minutes in the acid elution treatment.

The glass fiber woven fabric of the present comparative example thus obtained was such that the diameter of the glass filaments constituting the warp yarns and weft yarns was 6.3 $\mu$m, the mass per unit length of the warp yarns and weft yarns was 14 tex, the warp yarn weaving density was 68 yarns/25 mm, the weft yarn weaving density was 65 yarns/25 mm, the thickness was 87 $\mu$m, and the mass per unit area was 79 g/m$^2$.

The glass composition, tensile fracture stress, and dielectric loss tangent of the glass fiber woven fabric of the present comparative example were measured by the above methods. In addition, the handleability of the glass fiber was evaluated completely in the same manner as in Example 1. The results are shown in Table 3.

[Comparative Example 6]

A glass fiber woven fabric of the present comparative example was obtained completely in the same manner as in Comparative Example 4 except that hydrochloric acid having a concentration of 3.6% by mass was used as an acid solution in the acid elution treatment.

The glass fiber woven fabric of the present comparative example thus obtained was such that the diameter of the glass filaments constituting the warp yarns and weft yarns was 6.3 $\mu$m, the mass per unit length of the warp yarns and weft yarns was 14 tex, the warp yarn weaving density was 68 yarns/25 mm, the weft yarn weaving density was 65 yarns/25 mm, the thickness was 87 $\mu$m, and the mass per unit area was 79 g/m$^2$.

The glass composition, tensile fracture stress, and dielectric loss tangent of the glass fiber woven fabric of the present comparative example were measured by the above methods. In addition, the handleability of the glass fiber was evaluated completely in the same manner as in Example 1. The results are shown in Table 3.

[Table 1]

|  | Composition A | Composition B |
|---|---|---|
| SiO$_2$ (% by mass) | 55.0 | 54.3 |
| Al$_2$O$_3$ (% by mass) | 14.0 | 14.0 |
| TiO$_2$ (% by mass) | 2.0 | 0.5 |
| CaO+MgO+SrO+B$_2$O$_3$+ZrO$_2$ (% by mass) | 28.0 | 30.0 |
| F$_2$+Cl$_2$+Fe$_2$O$_3$+SnO$_2$+Li$_2$O+K$_2$O+Na$_2$O (% by mass) | 1.0 | 1.2 |
| CaO/(CaO+MgO+SrO+B$_2$O$_3$+ZrO$_2$) | 0.14 | 0.70 |

[Table 2]

|  | Example 1 | Example 2 | Example 3 | Example 4 | Example 5 | Example 6 | Example 7 |
|---|---|---|---|---|---|---|---|
| SiO$_2$ (% by mass); S | 98.90 | 98.90 | 98.90 | 98.30 | 98.30 | 97.20 | 99.70 |
| Al$_2$O$_3$ (% by mass) | 0.09 | 0.09 | 0.09 | 0.09 | 0.09 | 0.20 | 0.00 |
| CaO (% by mass) | 0.00 | 0.00 | 0.00 | 0.00 | 0.00 | 0.00 | 0.00 |
| TiO$_2$ (% by mass);T | 0.90 | 0.90 | 0.80 | 1.60 | 1.60 | 1.90 | 0.20 |
| Others (% by mass) | 0.11 | 0.11 | 0.21 | 0.01 | 0.01 | 0.70 | 0.10 |
| Total (% by mass) | 100.00 | 100.00 | 100.00 | 100.00 | 100.00 | 100.00 | 100.00 |
| Tensile fracture stress (MPa); BS | 49.5 | 31.2 | 47.5 | 21.7 | 17.6 | 27.5 | 12.2 |
| Al$_2$O$_3$/TiO$_2$ | 0.10 | 0.10 | 0.11 | 0.06 | 0.06 | 0.11 | 0.00 |
| T/(100-S) | 0.82 | 0.82 | 0.73 | 0.94 | 0.94 | 0.68 | 0.67 |
| BS×(T/(100-S))$^2$ | 33.1 | 20.9 | 25.1 | 19.2 | 15.6 | 12.7 | 5.4 |
| Dielectric loss tangent at 28 GHz | 0.0004 | 0.0004 | 0.0005 | 0.0008 | 0.0008 | 0.0007 | 0.0007 |
| Handleability | A | A | A | A | A | A | B |

[Table 3]

|  | Comparative Example 1 | Comparative Example 2 | Comparative Example 3 | Comparative Example 4 | Comparative Example 5 | Comparative Example 6 |
|---|---|---|---|---|---|---|
| SiO$_2$ (% by mass);S | 98.30 | 98.30 | 99.40 | 95.50 | 98.60 | 97.60 |
| Al$_2$O$_3$ (% by mass) | 0.10 | 0.10 | 0.10 | 2.50 | 0.60 | 1.20 |
| CaO (% by mass) | 0.00 | 0.00 | 0.00 | 1.00 | 0.30 | 0.20 |
| TiO$_2$ (% by mass);T | 1.60 | 1.60 | 0.30 | 0.40 | 0.40 | 0.40 |
| Others (% by mass) | 0.00 | 0.00 | 0.20 | 0.60 | 0.10 | 0.60 |
| Total (% by mass) | 100.00 | 100.00 | 100.00 | 100.00 | 100.00 | 100.00 |

(continued)

| | Comparative Example 1 | Comparative Example 2 | Comparative Example 3 | Comparative Example 4 | Comparative Example 5 | Comparative Example 6 |
|---|---|---|---|---|---|---|
| Tensile fracture stress (MPa); BS | 38.9 | 5.4 | 15.8 | 81.0 | 26.2 | 94.8 |
| $Al_2O_3/TiO_2$ | 0.06 | 0.06 | 0.33 | 6.25 | 1.50 | 3.00 |
| T/(100-S) | 0.94 | 0.94 | 0.50 | 0.09 | 0.29 | 0.17 |
| $BS \times (T/(100-S))^2$ | 34.5 | 4.8 | 4.0 | 0.6 | 2.1 | 2.6 |
| Dielectric loss tangent at 28 GHz | 0.0016 | 0.0007 | 0.0012 | 0.0383 | 0.0234 | 0.0096 |
| Handleability | A | C | A | A | A | A |

It can be obviously seen from Table 2 that the glass fibers of Examples 1 to 7, in each of which the value of $BS \times (T/(100-S))^2$ was in the range of 5.2 to 33.8, each had a dielectric loss tangent of less than 0.0010 at a measurement frequency of 28 GHz, and were glass fibers having excellent handleability.

On the other hand, it can be obviously seen from Table 3 that the glass fiber of Comparative Example 1, in which the value of $BS \times (T/(100-S))^2$ was more than 33.8, had a dielectric loss tangent of more than 0.0010 at a measurement frequency of 28 GHz.

In addition, it can be obviously seen from Table 3 that each of the glass fibers of Comparative Examples 2 to 6, in which the value of $BS \times (T/(100-S))^2$ was less than 5.2, had a dielectric loss tangent of more than 0.0010 at a measurement frequency of 28 GHz or was not glass fiber having sufficient handleability.

## Claims

1. Glass fiber comprising a glass composition comprising:

   $SiO_2$ in a range of 92.50 to 99.99% by mass;
   $TiO_2$ in a range of 0.01 to 5.00% by mass; and
   $Al_2O_3$ in a range of 0.00 to 2.50% by mass,
   with respect to a total amount of the glass composition, wherein
   the glass fiber has a tensile fracture stress in a range of 1.0 to 100.0 MPa, and
   a content S of $SiO_2$, a content T of $TiO_2$, and the tensile fracture stress BS of the glass fiber satisfy following formula (1):

$$5.2 \leq BS \times (T/(100-S))^2 \leq 33.8 \cdots (1).$$

2. The glass fiber according to claim 1, wherein the content S of $SiO_2$, the content T of $TiO_2$, and the tensile fracture stress BS of the glass fiber satisfy following formula (2):

$$9.1 \leq BS \times (T/(100-S))^2 \leq 33.5 \cdots (2).$$

3. The glass fiber according to claim 1, wherein the content S of $SiO_2$, the content T of $TiO_2$, and the tensile fracture stress BS of the glass fiber satisfy following formula (3):

$$20.1 \leq BS \times (T/(100-S))^2 \leq 33.1 \cdots (3).$$

4. A glass fiber woven fabric comprising the glass fiber according to any one of claims 1 to 3.

**5.** A glass fiber-reinforced resin composition comprising the glass fiber according to any one of claims 1 to 3.

## INTERNATIONAL SEARCH REPORT

| | International application No. |
|---|---|
| | **PCT/JP2024/013780** |

| A. | CLASSIFICATION OF SUBJECT MATTER |
|---|---|

*C03C 13/02*(2006.01)i; *C03C 3/06*(2006.01)i; *C08J 5/08*(2006.01)i; *D03D 1/00*(2006.01)i; *D03D 15/267*(2021.01)i
FI:  C03C13/02; C03C3/06; C08J5/08 CFD; D03D1/00 A; D03D15/267

According to International Patent Classification (IPC) or to both national classification and IPC

| B. | FIELDS SEARCHED |
|---|---|

Minimum documentation searched (classification system followed by classification symbols)

C03C1/00-C03C14/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 5-178642 A (ASAHI GLASS CO., LTD.) 20 July 1993 (1993-07-20) | 1-5 |
| A | JP 9-169548 A (NITTO BOSEKI CO., LTD.) 30 June 1997 (1997-06-30) | 1-5 |
| A | JP 2001-525783 A (RICHTER, Robin) 11 December 2001 (2001-12-11) | 1-5 |
| A | WO 2021/049581 A1 (NIPPON SHEET GLASS CO., LTD.) 18 March 2021 (2021-03-18) | 1-5 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/013780**

| Patent document cited in search report | | | Publication date (day/month/year) | Patent family member(s) | | | Publication date (day/month/year) |
|---|---|---|---|---|---|---|---|
| JP | 5-178642 | A | 20 July 1993 | US | 5248637 | A | |
| | | | | EP | 510653 | A1 | |
| JP | 9-169548 | A | 30 June 1997 | (Family: none) | | | |
| JP | 2001-525783 | A | 11 December 2001 | WO | 1998/051631 | A1 | |
| | | | | DE | 19724874 | A1 | |
| | | | | CN | 1263515 | A | |
| | | | | US | 6468932 | B1 | |
| | | | | KR | 10-0500393 | B1 | |
| WO | 2021/049581 | A1 | 18 March 2021 | US | 2023/0024895 | A1 | |
| | | | | EP | 4029840 | A1 | |
| | | | | CN | 114341067 | A | |

Form PCT/ISA/210 (patent family annex) (July 2022)

**REFERENCES CITED IN THE DESCRIPTION**

**Patent documents cited in the description**

- JP 2009263569 A
- JP 9169548 A